# EUROPÄISCHE PATENTSCHRIFT

(11) **EP 0 985 571 B1**
(45) Veröffentlichungstag und Bekanntmachung des Hinweises auf die Patenterteilung: **12.11.2003**
(21) Anmeldenummer: 99114197.9
(22) Anmeldetag: 23.07.1999
(51) Int. Cl.: B60K 15/077, B60K 15/04

(54) **Einfüllstutzen**
Filler pipe
Embout de remplissage

(30) Priorität: 10.08.1998 DE 19836061
(43) Veröffentlichungstag der Anmeldung: 15.03.2000
(73) Patentinhaber: Siemens Aktiengesellschaft, 80333 München (DE)
(72) Erfinder: Meyer, Knut, Dr., 45239 Essen (DE); Löw, Peter, Andreas, 64711 Erbach (DE)

(56) Entgegenhaltungen:
- EP-A- 0 832 777
- DE-A- 19 540 269
- GB-A- 1 444 317
- US-A- 4 441 533

## Beschreibung

Die Erfindung betrifft einem Kraftstoffbehälter mit einem Einfüllrohr zum Befüllen eines einen Schwalltopf aufweisenden Kraftstoffbehälters mit Kraftstoff.

Der Kraftstoffbehälter heutiger Kraftfahrzeuge muss neben einer optimierten Raumökonomie zugleich ein Höchstmaß an passiver Sicherheit bieten. Aus diesem Grund wird der Kraftstoffbehälter zumeist in einem vor mechanischer Beschädigung besonders gut geschützten Bereich der Hinterachse eingesetzt. Zugleich darf unter keinerlei Fahrbedingungen, insbesondere auch nicht bei einem Überschlag, Kraftstoff austreten. Um dennoch eine bequeme Befüllung des Kraftstoffbehälters zu ermöglichen, ist der Kraftstoffbehälter mittels des Einfüllrohres mit einer im seitlichen Heckbereich angeordneten Einfüllöffnung verbunden. Durch das Einfüllrohr gelangt der einströmende Kraftstoff in den Kraftstoffbehälter und bei ausreichend hohem Füllstand in einen darin eingesetzten Schwalltopf. Um eine ausreichende Versorgung der Brennkraftmaschine auch unter schwierigen Fahrbedingungen zu ermöglichen, saugt die Fördereinheit den Kraftstoff nicht unmittelbar aus dem Kraftstoffbehälter, sondern aus dem die Fördereinheit umschließenden Schwalltopf. Dieser Schwalltopf wird hierzu mittels einer Pumpe, beispielsweise einer Saugstrahlpumpe, während des Betriebes ständig mit Kraftstoff befüllt, so dass der Schwalltopf immer ausreichend mit Kraftstoff gefüllt ist. Bei fortschreitendem Kraftstoffverbrauch wird daher zunächst der den Schwalltopf umgebende Kraftstoffbehälter und zuletzt der Schwalltopf selbst entleert.

Nachteilig hierbei wirkt es sich aus, dass der nach vollständiger Entleerung des Kraftstoffbehälters eingefüllte Kraftstoff zunächst von der Fördereinheit nicht angesaugt werden kann, da sich der Kraftstoff zuerst im Kraftstoffbehälter verteilt und der Füllstand dabei so gering bleibt, dass die erforderliche Menge nicht in den Schwalltopf fließt. Erst größere Mengen des Kraftstoffes führen zu einer ausreichenden Versorgung des Schwalltopfes mit Kraftstoff und ermöglichen so die Wiederherstellung des betriebsbereiten Zustandes. Gerade bei einer Notbefüllung mittels eines Reservekanisters reicht die hierzu erforderliche Menge jedoch unter Umständen nicht aus.

Es ist auch bereits daran gedacht worden, den durch das Einfüllrohr in den Kraftstoffbehälter einströmenden Kraftstoff unmittelbar in den Schwalltopf einzuleiten, so dass dieser zuerst befüllt wird und sich anschließend der überlaufende Kraftstoff im Kraftstoffbehälter verteilt. Nachteilig hierbei wirkt sich allerdings aus, dass es durch das Überlaufen des Schwalltopfes zu einer turbulenten Strömung kommt, so dass der Kraftstoff zum Überschäumen und zum Ausgasen neigt. Zugleich verzögert sich die Dauer zum Befüllen des Kraftstoffbehälters, da zwischenzeitlich der Vorgang unterbrochen und so lange gewartet werden muss, bis sich der Kraftstoff beruhigt hat. Während dieser Zeit können allerdings Kraftstoffdämpfe ungehindert aus dem Kraftstoffbehälter entweichen, was gerade im Hinblick auf die gesundheitsgefährdenden Folgen dieser Kraftstoffdämpfe vermieden werden muss. Weiterhin hat sich in der Praxis gezeigt, dass große Volumenströme, die unmittelbar in den relativ kleinen Schwalltopf eingeleitet werden, nicht zu einer zuverlässigen Befüllung geeignet sind, sondern dass im Gegenteil ein Großteil des Kraftstoffes herausspritzt bzw. überläuft und lediglich ein kleiner Teil im Schwalltopf zurückbleibt.

Ein gattungsgemäßer Behälter ist aus GB 1 444 317 bekannt.

Der Erfindung liegt das Problem zugrunde, ein Einfüllrohr der eingangs genannten Art so zu gestalten, dass einerseits das Einfüllen großer Volumenströme ohne verstärktes Ausgasen oder Aufschäumen möglich ist, andererseits auch bei kleinen Mengen Kraftstoff oder geringen Volumenströmen eine ausreichende Befüllung des Schwalltopfes sichergestellt werden kann.

Dieses Problem wird erfindungsgemäß dadurch gelöst, dass das Einfüllrohr ein Abzweigelement aufweist, welches zum Ableiten eines ersten Teilstroms des Kraftstoffes in den Schwalltopf und eines zweiten Teilstroms in den Kraftstoffbehälter ausgeführt ist. Hierdurch werden bei jedem Füllvorgang sowohl der Kraftstoffbehälter als auch der Schwalltopf unmittelbar befüllt. Dadurch kann einerseits vermieden werden, dass sich der einströmende Kraftstoff bei relativ geringen Mengen so in dem Kraftstoffbehälter verteilt, dass ein Ansaugen erschwert oder ausgeschlossen ist, andererseits wird dem Schwalltopf lediglich eine geringe Menge des Kraftstoffs unmittelbar zugeführt, so dass ein verstärktes Aufschäumen oder Ausgasen verhindert wird.

Dabei ist eine Weiterbildung der Erfindung besonders vorteilhaft, bei der das Abzweigelement derart ausgeführt ist, dass bei einem kleinen einströmenden Volumenstrom ein Großteil des Kraftstoffes dem Schwalltopf zuführbar ist. Dadurch wird bei geringen Mengen Kraftstoff und/oder kleinen Volumenströmen, wie sie beispielsweise beim Befüllen mittels eines Reservekanisters auftreten, zunächst der Schwalltopf gefüllt. Die Betriebsbereitschaft lässt sich dadurch bereits mit sehr geringen Mengen Kraftstoff wieder herstellen. Bei großen Volumenströmen gelangt der einströmende Kraftstoff hauptsächlich in den Kraftstoffbehälter und erleichtert daher die Befüllung. Die ausreichende Versorgung des Schwalltopfes ist daher in jedem Fall sichergestellt, wobei es insbesondere unerheblich ist, ob der einströmende Volumenstrom oder die Einfüllmenge mehr oder weniger groß sind.

Eine Weiterbildung der Erfindung ist besonders vorteilhaft, wenn das Abzweigelement zwei Querschnittsflächen aufweist, deren Größenverhältnis einstellbar ist. Hierdurch lässt sich der zur Befüllung des Schwalltopfes erforderliche Teilstrom problemlos an unterschiedliche Anforderungen anpassen. Hierbei ist es sowohl möglich, die Einstellung der beiden Querschnittsflächen bei der Montage des Abzweigelementes vorzunehmen, als auch einen Verstellmechanismus vorzusehen, der beispielsweise die Parameter Füllstand, Volumenstrom etc. erfasst und eine dementsprechende Verstellung des Abzweigelementes bewirkt. Dies kann mechanisch mittels eines entsprechenden Stellgliedes oder sensorisch mittels eines Steuerelementes erfolgen.

Dabei ist eine besonders vorteilhafte Ausführungsform der Erfindung dadurch gegeben, dass das Abzweigelement ein Trennblech hat. Hierdurch lässt sich eine einfache Aufteilung des einströmenden Volumenstromes vornehmen, wobei die entstehenden Strömungsverluste relativ gering bleiben. Die durch das Trennblech erzeugten Teilströme können dabei beispielsweise jeweils mittels einer Leitung einerseits mit dem Kraftstoffbehälter, andererseits mit dem Schwalltopf verbunden sein. Die durch das Trennblech erreichte Trennung in zwei Teilströme ermöglicht durch eine weitgehend beliebige Einstellung der beiden Querschnittsflächen eine individuelle Anpassung an unterschiedliche Anforderungen.

Eine weitere, besonders günstige Ausführungsform der Erfindung ist auch dadurch gegeben, dass das Abzweigelement durch eine Öffnung in der Wandung des Einfüllrohres gebildet ist. Durch diese Öffnung kann der einströmende Kraftstoff teilweise abgeleitet und dem Schwalltopf zugeführt werden. Diese beispielsweise als Langloch ausgeführte Öffnung ist hierzu in einem nach unten weisenden Abschnitt der Wandung des Einfüllrohres angeordnet, so dass kleine Volumenströme nahezu vollständig durch die Öffnung hindurchfließen können. Große Volumenströme, die insbesondere die ganze Querschnittsfläche des Einfüllrohres ausfüllen, strömen weitgehend ungehindert über die Öffnung hinweg. Die Strömungsgeschwindigkeit bleibt dabei weitgehend unverändert. Der mit dem Anbringen der Öffnung verbundene Montageaufwand ist dabei zugleich vergleichsweise gering, so dass auch die Möglichkeit besteht, vorhandene Anlagen problemlos nachzurüsten.

Eine besonders einfache Ausführungsform der Erfindung lässt sich auch dadurch erreichen, dass das Abzweigelement eine offene Rinne hat. Durch diese Rinne gelangt der Kraftstoff unmittelbar in den Schwalltopf, wobei die Querschnittsfläche der Rinne so gewählt ist, dass diese lediglich einen geringen Volumenstrom aufnehmen kann. Bei einem großen Volumenstrom tritt der Kraftstoff über die Seitenwände der Rinne und gelangt beispielsweise in eine die Rinne umgebende Rohrleitung, welche den Kraftstoff in den Kraftstoffbehälter leitet. Die Rinne kann auch so angeordnet sein, dass überschüssiger Kraftstoff in den Kraftstoffbehälter frei nach unten tropft oder entlang der Innenwand des Kraftstoffbehälters nach unten läuft.

Das Abzweigelement kann in einem schräg verlaufenden oder gegenüber der Vertikalen geneigten Abschnitt angeordnet sein. Besonders günstig ist jedoch eine Ausführungsform, bei der das Abzweigelement in einem horizontalen Abschnitt des Einfüllrohres angeordnet ist. Hierdurch lässt sich eine einfache und zuverlässige Trennung des einfließenden Kraftstoffes sowohl bei großen als auch bei kleinen Volumenströmen vornehmen. Dabei werden geringe Volumenströme weitgehend nach unten abgeführt und dem Schwalltopf zugeführt, während große Volumenströme weitgehend ungehindert dem Kraftstoffbehälter zugeführt werden können.

Eine besonders vorteilhafte Weiterbildung der Erfindung ist auch dann gegeben, wenn das Abzweigelement in einem gekrümmten Abschnitt des Einfüllrohres oder einem unmittelbar daran anschließenden Abschnitt angeordnet ist. Durch die Krümmung des Einfüllrohres verläuft die Strömung des Kraftstoffes unter dem Einfluss der Zentrifugalkraft bzw. der Massenträgheit bevorzugt an dem nach außen weisenden Abschnitt der Wandung. Dieser Effekt tritt dabei weitgehend unabhängig von der Strömungsgeschwindigkeit auf. In diesem Bereich lässt sich daher leicht mittels des Abzweigelementes eine geringe Einfüllmenge des Kraftstoffes, insbesondere auch bei hoher Strömungsgeschwindigkeit, zur Befüllung des Schwalltopfes vollständig ableiten. Bei großen Volumenströmen ist die Querschnittsfläche des Einfüllrohres weitgehend ausgefüllt, so dass der Einfluss der Zentrifugalkraft von lediglich untergeordneter Bedeutung ist und der Kraftstoff weitgehend ungehindert dem Kraftstoffbehälter zugeführt werden kann.

Die Erfindung läßt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig.1: eine seitliche, teilweise geschnittene Darstellung eines erfindungsgemäßen Einfüllrohres mit einem Kraftstoffbehälter,
- Fig.2: das in Fig.1 gezeigte Einfüllrohr in einer Vorderansicht,
- Fig.3: eine seitliche, teilweise geschnittene Darstellung einer weiteren Ausführungsform eines Einfüllrohres,
- Fig.4: das in Fig.3 gezeigte Einfüllrohr in einer Vorderansicht.

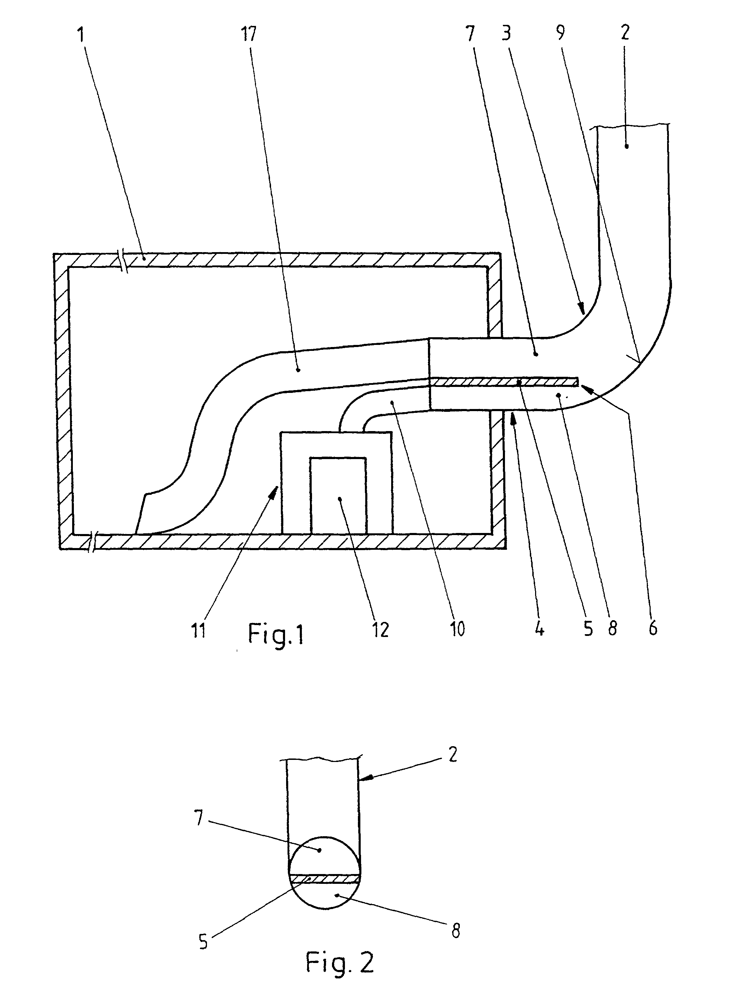

Figur 1 zeigt in einer Prinzipdarstellung ein mit einem Kraftstoffbehälter 1 verbundenes Einfüllrohr 2 in einer teilweise geschnittenen Seitenansicht. Das lediglich abschnittsweise dargestellte Einfüllrohr 2 weist einen gekrümmten Abschnitt 3 auf, in dem der von oben senkrecht in das Einfüllrohr 2 einströmende Kraftstoff in einen horizontalen Abschnitt 4 umgelenkt wird. Das Einfüllrohr 2 weist ein als Trennblech 5 ausgeführtes Abzweigelement 6 auf, welches das Einfüllrohr 2 in eine obere Querschnittsfläche 7 für einen mittels eines Leitungselementes 17 in den Kraftstoffbehälter 1 führenden Teilstrom und eine untere Querschnittsfläche 8 für einen zweiten Teilstrom unterteilt. Das Trennblech 5 ragt hierzu teilweise in den gekrümmten Abschnitt 3 hinein, so dass der sich unter dem Einfluss der Fliehkraft an einen nach außen weisenden Bereich einer Wandung 9 des Einfüllrohres 2 anschmiegende Kraftstoff, insbesondere bei relativ kleinen Volumenströmen, bevorzugt in die untere Querschnittsfläche 8 eintritt. Bei großen Volumenströmen sind sowohl die untere Querschnittsfläche 8 als auch die obere Querschnittsfläche 7 des Einfüllrohres 2 vollkommen ausgefüllt, so dass entsprechend des Verhältnisses der oberen Querschnittsfläche 7 zu der unteren Querschnittsfläche 8 in der dargestellten Ausführungsform ein Großteil des Kraftstoffes unmittelbar dem Kraftstoffbehälter 1 zugeführt wird. Unabhängig von dem eintretenden Volumenstrom des Kraftstoffes gelangt dabei in jedem Fall eine ausreichende Menge des Kraftstoffes in die untere Querschnittsfläche 8 und mittels eines Leitungselementes 10 zu einem Schwalltopf 11. Eine in dem Schwalltopf 11 angeordnete Fördereinheit 12 wird daher stets ausreichend mit Kraftstoff versorgt, so dass auch im Falle einer Notbefüllung mittels eines Reservekanisters die Kraftstoffversorgung zuverlässig wiederhergestellt wird. Der Kraftstoff kann sich daher nicht in für die Fördereinheit 12 unerreichbaren Vertiefungen des Kraftstoffbehälters 1 verteilen, ohne dass hierbei zuvor der Schwalltopf 11 ausreichend befüllt wird.

Figur 2 zeigt eine teilweise geschnitten dargestellte Vorderansicht des Einfüllrohres 2. Zu erkennen ist das Trennblech 5, welches das Einfüllrohr 2 in die obere Querschnittsfläche 7 und die untere Querschnittsfläche 8 teilt. In diesem Fall ist die untere Querschnittfläche 8 kleiner als die obere Querschnittsfläche 7 gewählt, wobei ein optimales Verhältnis der jeweiligen Abstände des Trennbleches 5 zum oberen Rand und zum unteren Rand bei etwa 2 zu 1 liegt.

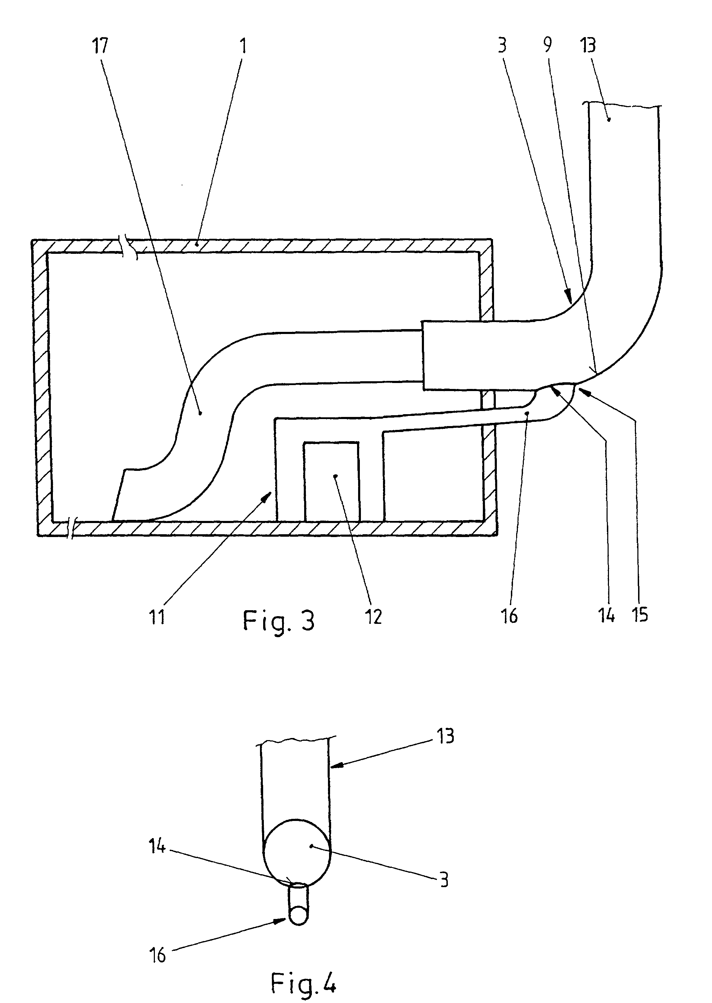

Figur 3 zeigt eine gegenüber dem in Figur 1 dargestellten Einfüllrohr abgewandelte Ausführungsform eines Einfüllrohres 13 in einer teilweise geschnittenen, Seitenansicht. Das Einfüllrohr 13 weist hierbei in seinem gekrümmten Abschnitt 3 ein mit einer Öffnung 14 versehenes Abzweigelement 15 auf, durch welche ein Teilstrom des in das Einfüllrohr 13 eintretenden Kraftstoffs abgeleitet und mittels eines Leitungselementes 16 unmittelbar dem Schwalltopf 11 zugeführt wird. Bei kleinen Volumenströmen des Kraftstoffes läuft der Kraftstoff im Wesentlichen an dem nach außen weisenden Bereich der Wandung 9 des gekrümmten Abschnitts 3 entlang, so dass ein Großteil des Kraftstoffs durch die Öffnung 14 hindurchtritt. Größere Volumenströme passieren den gekrümmten Abschnitt 3 ungehindert und werden daher überwiegend mittels des Leitungselementes 17 dem Kraftstoffbehälter 1 zugeführt. Durch die Ausführung des Abzweigelementes 15 mit der Öffnung 14 bleibt der Querschnitt des Einfüllrohres 13 unverändert, so dass es zu keiner nachteiligen Verzögerung oder zu Verwirbelungen der Strömung und einem damit verbundenen, verstärkten Aufschäumen oder Ausgasen des Kraftstoffes kommt.

Figur 4 zeigt das in Figur 3 dargestellte Einfüllrohr 13 in einer Vorderansicht. Zu erkennen ist die in dem gekrümmten Abschnitt 3 angeordnete Öffnung 14, durch die ein Teilstrom des Kraftstoffes in das Leitungselement 16 gelangt.

## Patentansprüche

1. Kraftstoffbehälter (1) mit einem Einfüllrohr (2, 13) zum Befüllen des Kraftstoffbehälters (1) mit Kraftstoff, mit einem zwei Leitungselemente (10, 16, 17) aufweisenden Abzweigelement (6, 15) des Einfüllrohres (2, 13), **dadurch gekennzeichnet, dass** ein Kraftstoff sammelnder Schwalltopf (11) im Kraftstoffbehälter (1) angeordnet ist, dass eines der Leitungselemente (10, 16) des Abzweigelementes (6, 15) in den Schwalltopf (11) und das andere Leitungselement (17) in einen von dem Schwalltopf (11) entfernten Bereich des Kraftstoffbehälters (1) mündet, so daß das Abzweigelement (6, 15) zum Ableiten eines ersten Teilstroms des Kraftstoffes in den Schwalltopf und eines zweiten Teilstroms in den Kraftstoffbehälter ausgeführt ist.

2. Kraftstoffbehälter nach Anspruch 1, **dadurch gekennzeichnet, dass** das Abzweigelement (6, 15) zwei Querschnittsflächen (7, 8) aufweist, deren Größenverhältnis einstellbar ist.

3. Kraftstoffbehälter nach Anspruch 1 oder 2, **dadurch gekennzeichnet, dass** das Abzweigelement (6, 15) ein Trennblech (5) hat.

4. Kraftstoffbehälter nach Anspruch 1 oder 2, **dadurch gekennzeichnet, dass** das Abzweigelement (15) eine Öffnung (14) in der Wandung (9) des Einfüllrohres (13) aufweist.

5. Kraftstoffbehälter nach zumindest einem der vorhergehenden Ansprüche, **dadurch gekennzeichnet, dass** das Abzweigelement (6, 15) eine offene Rinne hat.

6. Kraftstoffbehälter nach zumindest einem der vorhergehenden Ansprüche, **dadurch gekennzeichnet, dass** das Abzweigelement (6, 15) in einem horizontalen Abschnitt (4) des Einfüllrohres (2, 13) angeordnet ist.

7. Kraftstoffbehälter nach zumindest einem der Ansprüche 1 bis 5, **dadurch gekennzeichnet, dass** das Abzweigelement (6, 15) in einem gekrümmten Abschnitt (3) des Einfüllrohres (2, 13) oder einem unmittelbar daran anschließenden Abschnitt (4) angeordnet ist.

## Claims

1. Fuel tank (1) having a filling pipe (2, 13) for filling the fuel tank (1) with fuel, having a branching element (6, 15) of the filling pipe (2, 13) that has two line elements (10, 16, 17), **characterized in that** an antisurge tower (11) which collects fuel is arranged in the fuel tank (1), **in that** one of the line elements (10, 16) of the branching element (6, 15) leads into the antisurge tower (11) and the other line element (17) leads into a region of the fuel tank (1) that is at a distance from the antisurge tower (11), with the result that the branching element (6, 15) is designed to divert a first subflow of the fuel into the antisurge tower and a second subflow into the fuel tank.

2. Fuel tank according to Claim 1, **characterized in that** the branching element (6, 15) has two cross-sectional areas (7, 8), the ratio of size of which can be set.

3. Fuel tank according to Claim 1 or 2, **characterized in that** the branching element (6, 15) has a separating plate (5).

4. Fuel tank according to Claim 1 or 2, **characterized in that** the branching element (15) has an opening (14) in the wall (9) of the filling pipe (13).

5. Fuel tank according to at least one of the preceding claims, **characterized in that** the branching element (6, 15) has an open duct.

6. Fuel tank according to at least one of the preceding claims, **characterized in that** the branching element (6, 15) is arranged in a horizontal section (4) of the filling pipe (2, 13).

7. Fuel tank according to at least one of Claims 1 to 5, **characterized in that** the branching element (6, 15) is arranged in a curved section (3) of the filling pipe (2, 13) or in a directly adjacent section (4).

## Revendications

1. Réservoir de carburant (1) avec une tubulure de remplissage (2, 13) destinée au remplissage du réservoir de carburant (1) avec du carburant et ayant un élément de déviation (6, 15) de la tubulure de remplissage (2, 13) comportant deux éléments de conduite (10, 16, 17),
**caractérisé par le fait qu'**un pot de compensation (11), qui accumule du carburant, est disposé dans le réservoir de carburant (1), que l'un des éléments de conduite (10, 16) de l'élément de déviation (6, 15) débouche dans le pot de compensation (11) et que l'autre élément de conduite (17) débouche dans une zone du réservoir de carburant (1) éloignée du pot de compensation (11), si bien que l'élément de déviation (6, 15) est conçu pour dévier un premier écoulement partiel du carburant dans le pot de compensation et un deuxième écoulement partiel dans le réservoir de carburant.

2. Réservoir de carburant (1) selon la revendication 1
**caractérisé par le fait que** l'élément de déviation (6, 15) comporte deux sections transversales (7, 8) dont le rapport entre les aires est réglable.

3. Réservoir de carburant (1) selon la revendication 1 ou 2
**caractérisé par le fait que** l'élément de déviation (6, 15) a une tôle de séparation (5).

4. Réservoir de carburant (1) selon la revendication 1 ou 2
**caractérisé par le fait que** l'élément de déviation (15) comporte une ouverture (14) dans la paroi (9) de la tubulure de remplissage (13).

5. Réservoir de carburant selon au moins l'une des revendications précédentes
**caractérisé par le fait que** l'élément de déviation (6, 15) a une goulotte ouverte.

6. Réservoir de carburant selon au moins l'une des revendications précédentes
**caractérisé par le fait que** l'élément de déviation (6, 15) est disposé dans une partie horizontale (4) de la tubulure de remplissage (2, 13).

7. Réservoir de carburant selon au moins l'une des revendications 1 à 5
**caractérisé par le fait que** l'élément de déviation (6, 15) est disposé dans une partie coudée (3) de la tubulure de remplissage (2, 13) ou dans une partie (4) suivant immédiatement une partie coudée (3) de la tubulure de remplissage (2, 13).
